# EUROPÄISCHE PATENTSCHRIFT

(11) **EP 1 564 389 B1**
(45) Veröffentlichungstag und Bekanntmachung des Hinweises auf die Patenterteilung: **30.01.2013**
(21) Anmeldenummer: 05100971.0
(22) Anmeldetag: 10.02.2005
(51) Int. Cl.: F01P 7/16, F01P 11/08

(54) **Kühlsystem für ein Fahrzeug**
Vehicle cooling system
Système de refroidissement pour véhicule

(30) Priorität: 13.02.2004 US 778819
(43) Veröffentlichungstag der Anmeldung: 17.08.2005
(73) Patentinhaber: DEERE & COMPANY, Moline, Illinois 61265-8098 (US)
(72) Erfinder: Werner, Gerald, 68535, Edingen-Neckarhausen (DE); Esau, Dierk, 68809, Neulussheim (DE)
(74) Vertreter: Magin, Ludwig Bernhard

(56) Entgegenhaltungen:
- EP-A- 0 916 819
- DE-A1- 19 854 544
- US-A- 2 670 933
- US-A- 5 215 044
- US-A- 6 053 131

## Beschreibung

Die Erfindung betrifft ein Kühlsystem für ein Fahrzeug. Das Fahrzeug umfasst eine Brennkraftmaschine, einen Hochtemperaturkreislauf und einen vom Hochtemperaturkreislauf getrennten Niedrigtemperaturkreislauf. Der Hochtemperaturkreislauf ist zur Kühlung der Brennkraftmaschine vorgesehen und weist mindestens einen Kühler auf. Der Niedrigtemperaturkreislauf ist zur Kühlung eines Ölkühlers und gegebenenfalls eines Ladeluftkühlers vorgesehen und weist mindestens einen Kühler auf.

Kühlsysteme der eingangs genannten Art sind beispielsweise aus der DE 41 14 704 A1 bekannt. Bei diesem Kühlsystem wird im Hochtemperaturkreislauf die Brennkraftmaschine und der Ladeluftkühler mit Hilfe des dort vorgesehenen Hochtemperatur-Rückkühlers gekühlt. Die Temperatur des im Hochtemperaturkreislauf befindlichen Kühlmittels beträgt ungefähr 90 bis 110 Grad Celsius. In dem vom Hochtemperaturkreislauf getrennten Niedrigtemperaturkreislauf wird sowohl der Ladeluftkühler als auch ein Ölkühler für Motoröl und ein Ölkühler für Getriebeöl mit Hilfe des dort vorgesehenen Niedrigtemperatur-Rückkühlers gekühlt. Die Temperatur des im Niedrigtemperaturkreislauf befindlichen Kühlermittels beträgt ungefähr 45 bis 90 Grad Celsius. Sowohl der Hochtemperatur- als auch der Niedrigtemperatur-Rückkühler ist in Form eines Luft-Kühlmittel-Wärmetauschers ausgeführt und wird im Folgenden der Einfachheit halber mit Kühler bezeichnet.

Mit dem aus der DE 41 14 704 A1 bekannten Kühlsystem soll eine effektive Kühlung des Ladeluftkühlers insbesondere dadurch möglich sein, dass dieser von den beiden Kühlkreisläufen gekühlt wird. In einer Ausführungsform dieses Kühlsystems ist vorgesehen, dass der Ölkühler für das Getriebeöl mit dem vom Kühler des Hochtemperaturkreislaufs kommenden Kühlmittel zusammen mit dem Kühlmittel des Niedrigtemperaturkreislaufs gekühlt wird, um große Wärmemengen abführen zu können.

Das aus der DE 41 14 704 A1 bekannte Kühlsystem ist dahingehend nachteilig, dass eine unmittelbare und schnelle Reaktion des Kühlsystems auf die momentanen Belastungen des Fahrzeugs nicht ohne weiteres möglich ist. Zwar sind in den beiden Kühlkreisläufen Regelventile vorgesehen, mit denen das Kühlmittel an den einzelnen Kühlern vorbeigeleitet werden kann. Hierdurch kann jedoch nicht in kurzen Zeitintervallen auf eventuelle Belastungsänderungen der Brennkraftmaschine des Fahrzeugs dahingehend reagiert werden, dass beispielsweise die Öltemperatur auf einer im Wesentlichen konstanten Temperatur gehalten wird.

Aus US 5,215,044 ist ein Kühlsystem gemäß den Merkmalen des Oberbegriffs des Anspruchs 1 bekannt.

Der vorliegenden Erfindung liegt daher die Aufgabe zugrunde, ein Kühlsystem der eingangs genannten Art anzugeben und weiterzubilden, durch welches die vorgenannten Probleme überwunden werden. Insbesondere soll die Öltemperatur in einem engen Temperaturbereich regelbar sein.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein Kühlsystem der eingangs genannten Art dadurch gekennzeichnet, dass der Ölkühler mit dem Hochtemperaturkreislauf verbindbar ist.

Da der Hochtemperaturkreislauf vom Niedrigtemperaturkreislauf zunächst getrennt ausgeführt ist, ist eine Verbindung des dem Niedrigtemperaturkreislauf zugeordneten Ölkühlers zum Hochtemperaturkreislauf insbesondere dahingehend zu verstehen, dass der Ölkühler zumindest in diesem Betriebszustand vollständig dem Hochtemperaturkreislauf zugeordnet und davon kühlbar oder erhitzbar ist, wie das beispielsweise durch eine entsprechende Umschaltung mittels eines Ventils bewirkt werden kann.

Erfindungsgemäß ist erkannt worden, dass durch eine Umschaltung bzw. durch eine Verbindung des Ölkühlers mit dem Hochtemperaturkreislauf insbesondere innerhalb kurzer Zeit die Öltemperatur erhöht werden kann, wenn das Fahrzeug beispielsweise über eine längere Zeit im Leerlauf betrieben wurde und die Öltemperatur - beispielsweise des Getriebeöls - unter einen vorgebbaren Wert abgesunken ist. Falls die Öltemperatur dann einen vorgebbaren oberen Wert aufweist, ist eine erneute Verbindung des Ölkühlers mit dem Niedrigtemperaturkreislauf vorgesehen, es kann sozusagen die Umschaltung rückgängig gemacht werden.

In einer bevorzugten Ausführungsform weist ein Ölkühler einen Ölkühler für Brennkraftmaschinenöl und/oder einen Ölkühler für Getriebeöl auf. Falls ein separater Ölkühler für das Brennkraftmaschinenöl und ein separater Ölkühler für das Getriebeöl vorgesehen ist, ist in vorteilhafter Weise eine Temperaturreglung des Brennkraftmaschinenöls unabhängig von der Temperaturregelung des Getriebeöls möglich.

Insbesondere in der Aufwärmphase der Brennkraftmaschine des Fahrzeugs ist der Ölkühler ausschließlich mit dem Hochtemperaturkreislauf verbindbar. Dies betrifft vor allem den Ölkühler, der für die Kühlung des Getriebeöls zuständig ist, da insbesondere hydraulische Einheiten, Ventile und Kupplungen dann die vorgegebenen Reaktionszeiten erfüllen können, wenn das Getriebeöl seine optimale Betriebstemperatur aufweist. Vorzugsweise ist in diesem Betriebszustand der Kühler des Hochtemperaturkreislaufs vom Hochtemperaturkreislauf abtrennbar, so dass das seine Betriebstemperatur noch nicht erreichte Kühlmittel des Hochtemperaturkreislaufs nicht noch zusätzlich von dem Kühler gekühlt wird. Somit wird in diesen Betriebszustand des Fahrzeugs der Hochtemperaturkreislauf vor allem zur Erwärmung der ihm angeschlossenen Komponenten genutzt.

In einer bevorzugten Ausführungsform ist der Ölkühler zum zeitgleichen Anschluss an zwei unterschiedliche Kühlkreisläufe zumindest zweigeteilt ausgebildet. Ein Teil des Ölkühlers ist mit dem Hochtemperaturkreislauf und ein anderer Teil des Ölkühlers ist mit dem Niedrigtemperaturkreislauf verbindbar. Hierdurch kann in besonders vorteilhafter Weise das Öl auch mit den dem Aufteilungsverhältnis des Ölkühlers entsprechenden Mischtemperaturen gekühlt oder erwärmt werden, so dass eine noch flexiblere und an den jeweiligen Betriebszustand des Fahrzeugs angepasste Temperaturreglung des Öls möglich ist. Zweckmäßigerweise könnte der eine Teil des Ölkühlers ein Drittel und der zweite Teil des Ölkühlers zwei Drittel des Ölkühlervolumens aufweisen, wobei sowohl der eine als auch der andere Teil des Ölkühlers jeweils mit dem Hochtemperaturkreislauf verbindbar ist.

In entsprechender Weise könnte der Ladeluftkühler zum Anschluss an unterschiedliche Kühlkreisläufe zweigeteilt ausgebildet sein, und ein Teil des Ladeluftkühlers könnte mit dem Hochtemperaturkreislauf und ein anderer Teil des Ladeluftkühlers könnte mit dem Niedrigtemperaturkreislauf verbindbar sein. Durch diese Maßnahme kann letztendlich die Ladeluft der Brennkraftmaschine in Abhängigkeit der momentanen Auslastung der Brennkraftmaschine bzw. des Fahrzeugs flexibel auf einen optimalen Wert geregelt werden.

Bevorzugt weist sowohl der Hochtemperaturkreislauf als auch der Niedrigtemperaturkreislauf eine Kühlmittelpumpe auf. Es sind auch Konfigurationen von Kühlsystemen denkbar, bei denen lediglich eine Kühlmittelpumpe vorgesehen ist, die jedoch getrennte Pumpkammern aufweist, mit denen das Kühlmittel der zwei getrennten Kühlkreisläufe zeitgleich gefördert werden kann.

In einer weiteren Ausführungsform ist vorgesehen, dass der Ölkühler und/oder der Ladeluftkühler kurzschließbar oder vom Hochtemperaturkreislauf und/oder vom Niedrigtemperaturkreislauf abtrennbar ist. Einen Kurzschluss könnte beispielsweise mit Hilfe einer Bypass-Leitung realisiert werden. Das Abtrennen des Ölkühlers vom Hochtemperaturkreislauf und/oder vom Niedrigtemperaturkreislauf könnte durch entsprechende angeordnete Ventile realisiert werden. Insoweit könnte für die Dauer des Kurzschlusses beziehungsweise der Abtrennung eine gezielte Erhöhung der Öltemperatur erreicht werden.

In einer ganz besonders bevorzugten Ausführungsform ist der Ladeluftkühler unmittelbar mit dem Ölkühler verbindbar. Dies ist insbesondere dann vorteilhaft, wenn die Brennkraftmaschine und wichtige Aggregate nach einem Kaltstart nach kurzer Zeit voll betriebsfähig sein sollen. Der Ladeluftkühler ist nämlich in diesem Betriebszustand des Fahrzeugs eines der ersten Aggregate, welches aufgrund der zu komprimierenden Ladeluft erwärmt wird. Diese Wärme kann jedoch über die unmittelbare Verbindung zum Ölkühler abgeführt und zum Erwärmen des den Ölkühler durchlaufenden Öls genutzt werden. Hierdurch kann das Öl schneller auf seine Betriebstemperatur gebracht werden, so dass nach einem Kaltstart des Fahrzeugs zumindest die diesbezüglichen Aggregate voll betriebsfähig sind. Vorzugsweise ist der Kühler des Niedrigtemperaturkreislaufs und/oder der Kühler des Hochtemperaturkreislaufs von einer solchen Verbindung zwischen Ladeluftkühler und Ölkühler abtrennbar. Dementsprechend erfolgt in diesen Betriebszustand keine Kühlung in dem Sinn, dass Wärme vom Fahrzeug an die Umgebungsluft abgegeben wird. Es erfolgt vielmehr ein Wärmetransport vom Ladeluftkühler zum Ölkühler.

Zum Erzielen einer schnellen Unterbrechung bzw. Verbindung des Ölkühlers mit dem Hochtemperaturkreislauf und/oder mit dem Niedrigtemperaturkreislauf sind die Leitungsverbindungen der Brennkraftmaschine, des Ölkühlers, gegebenenfalls des Ladeluftkühlers und/oder des Kühlers des Hochtemperaturkreislaufs und/oder des Kühlers des Niedrigtemperaturkreislaufs mittels mindestens eines Ventils verbindbar und/oder unterbrechbar. Dieses Ventil bzw. diese Ventile sind zweckmäßigerweise derart im Kühlsystem angeordnet, dass einerseits eine möglichst kurze Leitungsführung gewährleistet ist, andererseits jedoch eine flexible Zuordnung zumindest des Ölkühlers zu den jeweiligen Kühlkreisläufen möglich ist.

Ein solches Ventil könnte einen Thermostaten aufweisen und/oder elektrisch oder hydraulisch schaltbar ausgeführt sein. Letztendlich können hierbei Ventile eingesetzt werden, die aus dem Stand der Technik bekannt sind, wobei zur schnellen Regelung elektrisch oder hydraulisch schaltbar Ventile bevorzugt werden.

In einer ganz besonders bevorzugten Ausführungsform ist zur Steuerung bzw. Regelung des Kühlsystems eine Steuereinrichtung und mindestens ein Temperatursensor vorgesehen. So könnte beispielsweise ein Temperatursensor an der Brennkraftmaschine angeordnet sein, und zwar dort, wo das Kühlmittel des Hochtemperaturkreislaufs die Brennkraftmaschine verlässt. Ein weiterer Temperatursensor könnte beispielsweise am Ölkühler vorgesehen sein, wobei dieser Temperatursensor vorzugsweise unmittelbar die Öltemperatur detektiert und nicht die Temperatur des Kühlmittels detektiert, das den Ölkühler durchströmt. Schließlich könnte ein Temperatursensor am Ladeluftkühlers angeordnet sein, der ebenfalls vorzugsweise unmittelbar die Temperatur der Ladeluft detektiert.

Der Temperatursensor erzeugt Signale, welche von der Temperatur der Kühlmittelflüssigkeit bzw. der detektierten Temperatur abhängen. Diese Signale leitet der Temperatursensor der Steuereinrichtung zu. Die Steuereinrichtung könnte beispielsweise in Form eines Einplatinencomputers ausgeführt sein. Die Steuereinrichtung führt einen Vergleich der detektierten Temperatur mit einer vorgegebenen Temperatur oder einem vorgegebenen Temperaturbereich durch und steuert das Ventil bzw. die Ventile und/oder eine oder beide Kühlmittelpumpen entsprechend an, so dass der vorgegebene Temperaturbereich bzw. die vorgegebene Temperatur eingehalten wird bzw. werden.

In einer weiteren bevorzugten Ausführungsform ist zur Kühlung zumindest eines Teils des Ladeluftkühlers und/oder des Ölkühlers ein weiterer Kühlkreislauf vorgesehen. Der weitere Kreislauf ist von dem Hochtemperaturkreislauf und dem Niedrigtemperaturkreislauf getrennt angeordnet. Der weitere Kühlkreislauf weist eine Kühlmittelpumpe und einen Kühler auf.

Durch den weiteren Kreislauf kann in vorteilhafter Weise der Ladeluftkühler oder der Ölkühler auf ein noch tieferes Temperaturniveau heruntergekühlt werden. Der weitere Kühlkreislauf wird insbesondere dann zusätzlich zu dem Hochtemperaturkreislauf und zu dem Niedrigtemperaturkreislauf vorgesehen, wenn beispielsweise aufgrund künftiger, verschärfter Abgasbestimmungen die gesamte Kühlleistung des Kühlsystems erhöht werden muss. Gerade wenn nicht genügend Bauraum zur Verfügung steht, um die Kühler des Hochtemperaturkreislaufs oder des Niedrigtemperaturkreislaufs zur Erhöhung der Kühlleistung zu vergrößern, kann der weitere Kühlkreislauf vorgesehen sein, wobei dessen Kühler zwar ebenfalls Bauraum in Anspruch nimmt, dieser Kühler jedoch an einer anderen Stelle des Fahrzeugs angeordnet werden kann.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen in einer schematischen Darstellung die
- Fig. 1: ein erstes Ausführungsbeispiel eines erfindungsgemäßen Kühlsystems,
- Fig. 2: ein zweites Ausführungsbeispiel eines erfindungsgemäßen Kühlsystems und
- Fig. 3: ein drittes Ausführungsbeispiel eines erfindungsgemäßen Kühlsystems.

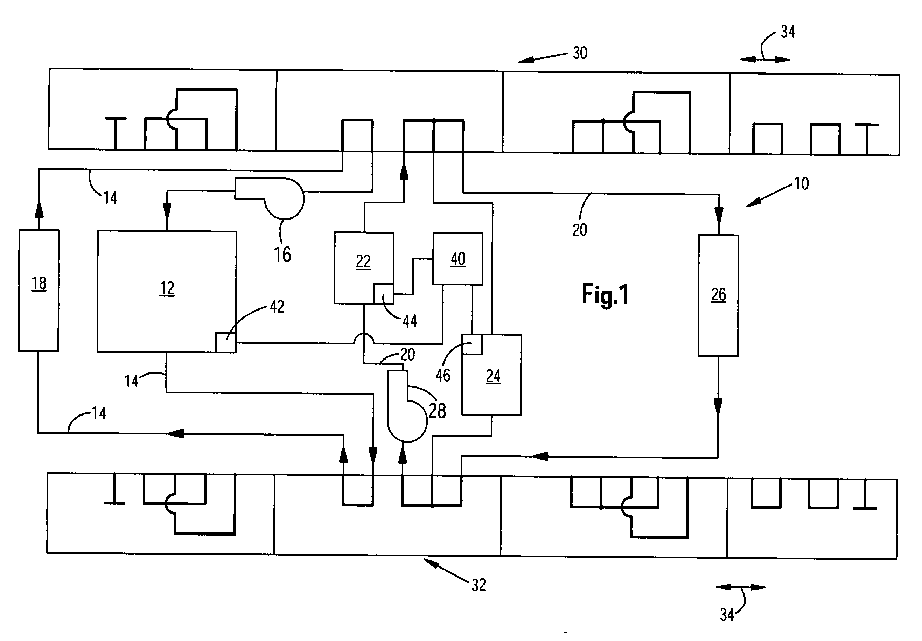

Das in Fig. 1 gezeigte Kühlsystem 10 dient für ein Fahrzeug, welches in Fig. 1 nicht gezeigt ist. Im Konkreten handelt es sich bei dem Fahrzeug um ein landwirtschaftliches Nutzfahrzeug, nämlich um einen Traktor. In den Fig. 1 bis 3 sind gleichartige oder ähnliche Bauteile bzw. Baugruppen mit denselben Bezugszeichen gekennzeichnet.

Das Fahrzeug umfasst eine Brennkraftmaschine 12, die an einen Hochtemperaturkreislauf 14 des Kühlsystems 10 angeschlossen ist. Der Hochtemperaturkreislauf 14 umfasst weiterhin eine Kühlmittelpumpe 16 und einen Kühler 18. Das Fahrzeug umfasst einen Niedrigtemperaturkreislauf 20, welcher einen Ladeluftkühler 22, einen Ölkühler 24, einen Kühler 26 und eine Kühlmittelpumpe 28 aufweist.

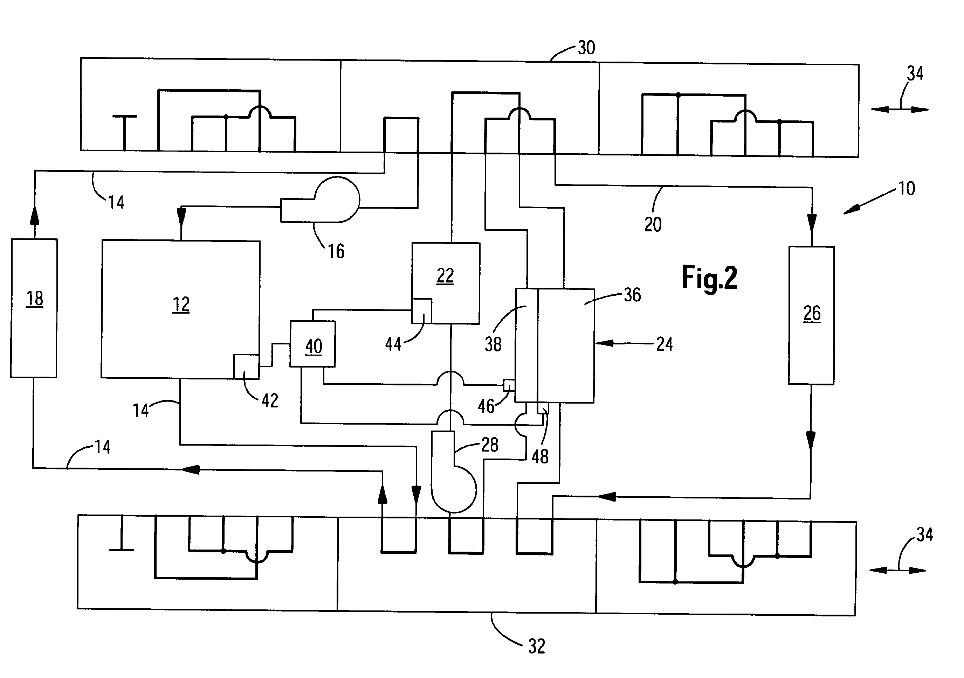

Das Kühlsystem 10 umfasst Ventile 30, 32, mit welchen es möglich ist die einzelnen Komponenten des Kühlsystems 10 in unterschiedlichen Konfigurationen miteinander zu verschalten. Die in Fig. 1 gezeigten Ventile 30 und 32 sind in Form von 5/4-Wegventilen ausgebildet, die in Fig. 2 gezeigten Ventile 30 und 32 sind in Form von 6/3-Wegventilen ausgebildet.

Es sei ganz besonders darauf hingewiesen, dass die schematische Darstellung aus den Fig. 1 und 2 lediglich zur Darstellung der erfindungsgemäßen Lehre dient und eine beispielhafte Verknüpfung der einzelnen Komponenten des Kühlsystems 10 zeigen soll. Eine realistische konkrete Ausgestaltung des Kühlsystems 10 wird sich - mit lediglich zwei Ventilen 30, 32 - im Fahrzeug anders darstellen, insbesondere werden mehrere einzelne Ventile an unterschiedlichen Orten angeordnet sein und die Leitungsführung wird beispielsweise bezüglich ihrer Länge optimiert sein.

In der zweiten Position von links der Ventile 30 und 32 aus Fig. 1, die in Fig. 1 als aktive Ventilstellung eingezeichnet ist, sind die Komponenten des Hochtemperaturkreislaufs 14 - die Brennkraftmaschine 12, die Kühlmittelpumpe 16 und der Kühler 18 - seriell miteinander verbunden. Die Komponenten des Niedrigtemperaturkreislaufs 20 - Kühler 26, Kühlmittelpumpe 28, Ladeluftkühler 22 und Ölkühler 24 - sind in der mittleren Stellung der Ventile 30, 32 derart miteinander verknüpft, dass der Kühler 26 und die Kühlmittelpumpe 28 seriell und der Ladeluftkühler 22 und der Ölkühler 24 hierzu parallel geschaltet sind. Der der mittleren Ventilstellung entsprechende Zustand des Kühlsystems 10 entspricht dem Zustand einer durchschnittlichen Auslastung der Brennkraftmaschine 12 sowohl der gegebenenfalls vorgesehenen Hydraulikkomponenten des Fahrzeugs, das mit dem Kühlsystem 10 ausgerüstet ist.

Erfindungsgemäß kann das in Fig. 1 gezeigte Kühlsystem 10 derart konfiguriert werden, dass der Ölkühler 24 mit dem Hochtemperaturkreislauf 14 verbunden werden kann. Hierzu sind die Ventile 30 und 32 in ihre jeweils dritte Position von links zu verbringen. In dieser Ventilstellung ist der Kühler 18 zur Brennkraftmaschine 12 mit Kühlmittelpumpe 16 und dem Ölkühler 24 parallel angeordnet, wobei die Kühlmittelpumpe 16 stromabwärts des die Brennkraftmaschine 12 durchströmenden Kühlmittels angeordnet ist. In dieser Ventilstellung sind der Ladeluftkühler 22, der Kühler 26 und die Kühlmittelpumpe 28 des Niedrigtemperaturkreislaufs 20 seriell verschaltet.

Der der dritten Position von links der beiden Ventile 30, 32 entsprechende Betriebszustand des Kühlsystems 10 wird für das Fahrzeug insbesondere dann eingenommen, wenn - aus welchen Gründen auch immer - die Temperatur des den Ölkühler 24 durchströmenden Öls unter einen vorgebbaren Wert gefallen ist und möglichst schnell auf eine Solltemperatur angehoben werden soll.

Falls in einem weiteren Betriebszustand des Fahrzeugs die Ventile 30, 32 in ihre jeweils ersten Ventilstellung von links verbracht sind, ist die Brennkraftmaschine 12, die Kühlmittelpumpe 16 und der Ölkühler 24 miteinander in einem Hochtemperaturkreislauf 14 verknüpft. In dieser Betriebsstellung ist der Kühler 18 des Hochtemperaturkreislaufs 14 nicht aktiv. Der Niedrigtemperaturkreislauf 20 ist in dieser Betriebsstellung durch eine serielle Anordnung des Kühlers 26, der Kühlmittelpumpe 28 und des Ladeluftkühlers 22 gebildet.

Der der ersten Ventilstellung von links der beiden Ventile 30, 32 entsprechende Betriebszustand des Kühlsystems 10 wird für das Fahrzeug insbesondere dann eingenommen, wenn die Brennkraftmaschine 12 sich kurz nach dem Starten in der Aufwärmphase befindet. In dieser Betriebsstellung ist es wünschenswert, dass auch das vom Ölkühler 24 gekühlte Öl möglichst schnell seine übliche Betriebstemperatur aufweist, so dass so früh wie möglich die im Fahrzeug zu betreibenden hydraulischen Komponenten, Ventile und Kupplungen - in Fig. 1 nicht gezeigt - zuverlässig betrieben bzw. angesteuert werden können. Hierzu ist die Brennkraftmaschine 12, die Kühlmittelpumpe 16 und der Ölkühler 24 in Serie miteinander verschaltet, wobei der Kühler 18 vom Hochtemperaturkreislauf 14 abgetrennt ist. In dieser Ventilstellung wird somit die vom Kühlmittel transportierte, in der Brennkraftmaschine 12 erzeugte Wärmeenergie zur Aufheizung des den Ölkühler 24 durchströmenden Öls genutzt.

In der vierten Ventilstellung von links der in Fig. 1 gezeigten Ventile 30, 32 ist die Brennkraftmaschine 12, die Kühlmittelpumpe 16 und der Kühler 18 des Hochtemperaturkreislaufs 14 in Serie miteinander verschaltet. Weiterhin ist der Ladeluftkühler 22 seriell mit dem Ölkühler 24 verschaltet. Der Kühler 26 des Niedrigtemperaturkreislaufs 20 ist in dieser Ventilposition vom Niedrigtemperaturkreislauf 20 abgeklemmt. Somit ist der Ladeluftkühler 22 unmittelbar mit dem Ölkühler 24 verbindbar. Eine Kühlmittelpumpe ist hierbei vorgesehen, jedoch in dieser Ventilstellung nicht eingezeichnet. Diese Ventilstellung wird insbesondere dann eingenommen, wenn die Brennkraftmaschine 12 und wichtige Aggregate des Fahrzeugs nach einem Kaltstart nach kurzer Zeit betriebsfähig sein sollen.

Der in den Fig. 1 und 2 gezeigte Ölkühler 24 ist zur Kühlung des Getriebeöls des Fahrzeugs vorgesehen, wobei das Getriebe des Fahrzeugs nicht gezeigt ist.

Fig. 2 zeigt in einer schematischen Darstellung ein weiteres Ausführungsbeispiel der vorliegenden Erfindung. Das hier gezeigte Kühlsystem 10 umfasst im Wesentlichen die gleichen Komponenten wie das in Fig. 1 gezeigte Kühlsystem 10. Hier ist der Ölkühler 24 zweigeteilt ausgebildet, er weist nämlich einen größeren Teil 36, der 2/3 des Ölkühlers 24 umfasst, und einen kleineren Teil 38 auf, der 1/3 des Ölkühlers 24 umfasst. Auch das in Fig. 2 gezeigte Kühlsystem 10 umfasst zwei, entlang der mit den Doppelpfeilen 34 gekennzeichneten Richtungen verstellbare Ventile 30, 32.

In der mittleren Ventilstellung der Ventile 30, 32 aus Fig. 2 umfasst der Hochtemperaturkreislauf 14 die Brennkraftmaschine 12, die Kühlmittelpumpe 16 und den Kühler 18. Der Niedrigtemperaturkreis 20 umfasst in dieser Ventilstellung den Kühler 26, die Kühlmittelpumpe 28, beide Teile 36, 38 des Ölkühlers 24 sowie den Ladeluftkühler 22. Sämtliche Komponenten des Niedrigtemperaturkreises 20 sind in dieser Ventilstellung seriell miteinander verknüpft. In dieser Ventilstellung ist das Fahrzeug in einem normalen Betriebszustand, in dem keine gravierenden Belastungsspitzen auftreten.

Falls die Ventile 30, 32 sich in ihrer jeweils rechten Ventilstellung befinden, ist der kleinere Teil 38 des Ölkühlers 24 mit dem Hochtemperaturkreis 14 verbunden. Die Brennkraftmaschine 12 und die Kühlmittelpumpe 16 sind in dieser Ventilstellung in Serie geschaltet. Hierzu sind der Kühler 18 und der kleinere Teil 38 des Ölkühlers 24 parallel geschaltet. Der Kühler 26 und die Kühlmittelpumpe 28 sind seriell zueinander angeordnet. Hierzu sind der Ladeluftkühler 22 und der größere Teil 36 des Ölkühlers 24 parallel verschaltet. Diese vier Komponenten bilden somit den Niedrigtemperaturkreis 20. In dieser Ventilstellung ist das Fahrzeug in einem Betriebszustand, in dem das den Ölkühler 24 durchströmende Öl eine Temperatur aufweist, die um eine relativ geringe Temperaturdifferenz unter einem vorgegebenen Sollwert liegt. Zum gezielten Erhöhen der Temperatur des den Ölkühler 24 durchströmenden Öls wird daher der kleinere Teil 36 des Ölkühlers 24 an den Hochtemperaturkreis 14 angeschlossen.

Zusätzlich oder alternativ könnte - was jedoch in Fig. 2 nicht gezeigt ist - auch der Ladeluftkühler 22 zweigeteilt ausgebildet sein, wobei der Ladeluftkühler 22 - vergleichbar wie auch der Ölkühler 24 - an unterschiedliche Kühlkreisläufe angeschlossen werden könnte.

Falls die Ventile 30, 32 sich jeweils in ihrer linken Stellung befinden, ist der größere Teil 36 des Ölkühlers 24 in Serie mit der Brennkraftmaschine 12 und der Kühlmittelpumpe 16 geschaltet, wobei dann lediglich diese Komponenten den Hochtemperaturkreislauf 14 bilden. Der Kühler 18 ist in dieser Ventilstellung inaktiv. Der Kühler 26, die Kühlmittelpumpe 28, der kleinere Teil 38 des Ölkühlers 24 und der Ladeluftkühler 22 bilden in dieser Ventilstellung den Niedrigtemperaturkreislauf 20. Diese Ventilstellung wird insbesondere dann eingenommen werden, wenn die Brennkraftmaschine des Fahrzeugs nach einer längeren Ruhepause gestartet wird und das den Ölkühler 24 durchströmende Öl schnell auf eine gewünschte Betriebstemperatur angehoben werden soll.

Zur Steuerung des Kühlsystems 10 ist eine Steuereinrichtung 40 vorgesehen, die ihrerseits die Kühlmittelpumpen 16, 28 sowie die Ventile 30, 32 ansteuert, was nicht näher dargestellt ist. Weiterhin sind Temperatursensoren 42, 44, 46 und 48 vorgesehen, die die Betriebstemperatur der Brennkraftmaschine 12, des Ladeluftkühlers 22 und des Ölkühlers 24 detektieren und hierbei Signale erzeugen, welche abhängig von der Kühlmittelflüssigkeit bzw. von der Temperatur des jeweiligen Aggregats sind. Die Signale der Temperatursensoren 42, 44, 46 und 48 werden der Steuereinrichtung 40 zugeleitet, die ihrerseits die Ventile 30, 32 und die Kühlmittelpumpen 16, 28 ansteuert.

Die Ansteuerung des Kühlsystems 10 durch die Steuereinrichtung 40 erfolgt derart, dass die Brennkraftmaschine 12, der Ladeluftkühler 22 bzw. das den Ölkühler 24 durchströmende Öl auf einer vorgebbaren Temperatur beziehungsweise in einem vorgebbaren Temperaturbereich gehalten wird. Hierdurch kann in ganz besonders vorteilhafter Weise eine Temperaturveränderung der Aggregate 12, 22 bzw. des den Ölkühler 24 durchströmenden Öls - beispielsweise auf Grund einer kurzfristig erhöhten Belastung des Fahrzeugs - im Wesentlichen vermieden oder gezielt eingestellt werden. Die Ventile 30, 32 sind elektrisch schaltbar ausgebildet.

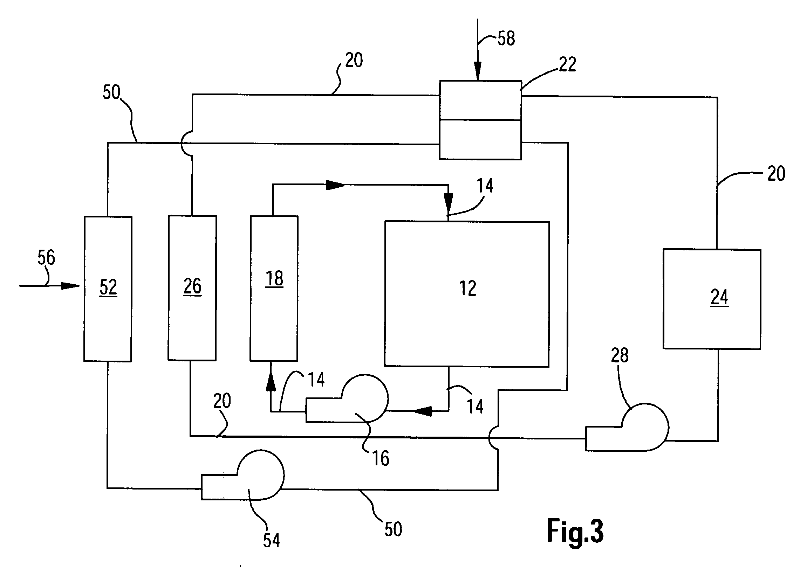

Fig. 3 zeigt ein weiteres Ausführungsbeispiel der vorliegenden Erfindung, wobei nunmehr ein konkret eingenommener Betriebszustand des Kühlsystems des Fahrzeugs gezeigt ist, wobei auf das Einzeichnen von Ventilen zugunsten einer übersichtlichen Darstellung verzichtet wurde. In dem in Fig. 3 gezeigten Betriebszustand des Kühlsystems ist die Brennkraftmaschine 12, die Kühlmittelpumpe 16 und der Kühler 18 seriell miteinander verschaltet und bilden den Hochtemperaturkreislauf 14. Der Ladeluftkühler 22 ist zweigeteilt ausgebildet, wobei der in Fig. 3 gezeigte obere Teil des Ladeluftkühlers 22, der Ölkühler 24, die Kühlmittelpumpe 28 sowie der Kühler 26 seriell miteinander verschaltet sind und hierbei den Niedrigtemperaturkreislauf 20 bilden. Es ist ein weiterer Kühlkreislauf 50 vorgesehen, welcher einen Kühler 52 und eine Kühlmittelpumpe 54 aufweist und welcher den zweiten Teil des Ladeluftkühlers 22 kühlt. Der weitere Kühlkreislauf 50 hat hierbei das tiefste Temperaturniveau. Die Kühler 52, 26 und 18 sind derart angeordnet, dass die von der Umgebung in das Fahrzeug eintretende Luft - mit dem Pfeil 56 angedeutet - zuerst den Kühler 52 des weiteren Kühlkreislaufs 50, dann den Kühler 26 des Niedrigtemperaturkreislaufs 20 und schließlich den Kühler 18 des Hochtemperaturkreislaufs 14 durchströmt. Mit dem Pfeil 58 ist die Stromrichtung der den Ladeluftkühler 22 durchströmenden Luft angedeutet. Dementsprechend bildet die Anordnung der Kühler 52, 26 und die Verschaltung des Niedrigtemperaturkreislaufs 20 und des weiteren Kühlkreislaufs 50 bezüglich des zweigeteilten Ladeluftkühlers 22 einen Gegenstromwärmetauscher.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Kühlsystem für ein Fahrzeug, welches eine Brennkraftmaschine (12), einen Hochtemperaturkreislauf (14) und einen Niedrigtemperaturkreislauf (20) aufweist, wobei der Hochtemperaturkreislauf (14) zur Kühlung der Brennkraftmaschine (12) vorgesehen ist und mindestens einen Kühler (18) des Hochtemperaturkreislaufs aufweist, wobei der Niedrigtemperaturkreislauf (20) zur Kühlung eines Ölkühlers (24) und eines Ladeluftkühlers (22) vorgesehen ist und mindestens einen Kühler (26) des Niedertemperaturkreislaufs aufweist, wobei der Ölkühler (24) mit dem Hochtemperaturkreislauf (14) verbindbar ist, **dadurch gekennzeichnet, dass** der Hochtemperaturkreislauf (14) stets von dem Niedrigtemperaturkreislauf (20) getrennt ist und dass der Ladeluftkühler (22) unmittelbar mit dem Ölkühler (24) verbindbar ist.

2. Kühlsystem nach Anspruch 1, **dadurch gekennzeichnet, dass** der Ölkühler (24) einen Ölkühler für Brennkraftmaschinenöl und/oder einen Ölkühler für Getriebeöl aufweist.

3. Kühlsystem nach Anspruch 1 oder 2, **dadurch gekennzeichnet, dass** in einem Betriebszustand des Fahrzeugs der Ölkühler (24) im mit dem Hochtemperaturkreislauf (14) verbunden ist, wobei vorzugsweise der Kühler (18) des Hochtemperaturkreislaufs (14) vom Hochtemperaturkreislauf (14) abtrennbar ist.

4. Kühlsystem nach einem der Ansprüche 1 bis 3, **dadurch gekennzeichnet, dass** der Ölkühler (24) zum Anschluss an zwei unterschiedliche Kühlkreisläufe (14, 20) zweigeteilt ausgebildet ist, und dass ein Teil (36) des Ölkühlers (24) mit dem Hochtemperaturkreislauf (14) und ein anderer Teil (38) des Ölkühlers (24) mit dem Niedrigtemperaturkreislauf (20) verbindbar ist.

5. Kühlsystem nach einem der Ansprüche 1 bis 4, **dadurch gekennzeichnet, dass** der Ladeluftkühler (22) zum Anschluss an unterschiedliche Kühlkreisläufe (14, 20) zweigeteilt ausgebildet ist, und dass ein Teil des Ladeluftkühlers (22) mit dem Hochtemperaturkreislauf (14) und ein anderer Teil des Ladeluftkühlers (22) mit dem Niedrigtemperaturkreislauf (20) verbindbar ist.

6. Kühlsystem nach einem der Ansprüche 1 bis 5, **dadurch gekennzeichnet, dass** der Hochtemperaturkreislauf (14) und/oder der Niedrigtemperaturkreislauf (20) eine Kühlmittelpumpe (16, 28) aufweist.

7. Kühlsystem nach einem der Ansprüche 1 bis 6, **dadurch gekennzeichnet, dass** der Ölkühler (24) und/oder der Ladeluftkühler (22) kurzschließbar oder vom Hochtemperaturkreislauf (14) und/oder vom Niedrigtemperaturkreislauf (20) abtrennbar ist.

8. Kühlsystem nach einem der Ansprüche 1 bis 7, **dadurch gekennzeichnet, dass** der Kühler des Niedrigtemperaturkreislaufs (20) und/oder der Kühler des Hochtemperaturkreislaufs (14) hiervon abtrennbar ist.

9. Kühlsystem nach einem der Ansprüche 1 bis 8, **dadurch gekennzeichnet, dass** Leitungsverbindungen der Brennkraftmaschine (12), des Ölkühlers (24), gegebenenfalls des Ladeluftkühlers (22) und/oder des Kühlers (18, 26) des Hochtemperaturkreislaufs (14) und/oder des Niedrigtemperaturkreislaufs (20) mittels mindestens eines Ventils (30, 32) verbindbar und/oder unterbrechbar sind.

10. Kühlsystem nach Anspruch 9, **dadurch gekennzeichnet, dass** ein Ventil (30, 32) einen Thermostaten aufweist und/oder elektrisch oder hydraulisch schaltbar ist.

11. Kühlsystem nach Anspruch 9 oder 10, **dadurch gekennzeichnet, dass** eine Steuereinrichtung (40) und mindestens ein Temperatursensor (42, 44, 46, 48) vorgesehen ist, wobei der Temperatursensor (42, 44, 46, 48) Signale erzeugt, welche abhängig von der Temperatur der Kühlmittelflüssigkeit sind, und diese Signale der Steuereinrichtung (40) zuleitet, und wobei das Ventil bzw. die Ventile (30, 32) und/oder eine Kühlmittelpumpe (16, 28) von der Steuereinrichtung (40) ansteuerbar sind.

12. Kühlsystem nach einem der Ansprüche 1 bis 11, **dadurch gekennzeichnet, dass** zur Kühlung zumindest eines Teils des Ladeluftkühlers (22) und/oder des Ölkühlers (24) ein weiterer Kühlkreislauf (50) vorgesehen ist, welcher von dem Hochtemperaturkreislauf (14) und dem Niedrigtemperaturkreislauf (20) getrennt angeordnet ist, wobei der weitere Kühlkreislauf (50) eine Kühlmittelpumpe (54) und einen Kühler (52) aufweist.

## Claims

1. Cooling system for a vehicle which has an internal combustion engine (12), a high temperature circuit (14) and a low temperature circuit (20), wherein the high temperature circuit (14) is provided for cooling the internal combustion engine (12) and has at least one cooler (18) of the high temperature circuit, wherein the low temperature circuit (20) is provided for cooling an oil cooler (24) and a charge air cooler (22), and at least one cooler (26) of the low temperature circuit, wherein the oil cooler (24) can be connected to the high temperature circuit (14), **characterized in that** the high temperature circuit (14) is always disconnected from the low temperature circuit (20), and **in that** the charge air cooler (22) can be connected directly to the oil cooler (24).

2. Cooling system according to Claim 1, **characterized in that** the oil cooler (24) has an oil cooler for internal combustion engine oil and/or an oil cooler for transmission oil.

3. Cooling system according to Claim 1 or 2, **characterized in that**, in an operating state of the vehicle, the oil cooler (24) is connected only to the high temperature circuit (14), wherein the cooler (18) of the high temperature circuit (14) can preferably be disconnected from the high temperature circuit (14).

4. Cooling system according to one of Claims 1 to 3, **characterized in that** the oil cooler (24) is embodied divided in two in order to be connected to two different cooling circuits (14, 20), and **in that** a part (36) of the oil cooler (24) can be connected to the high temperature circuit (14), and another part (38) of the oil cooler (24) can be connected to the low temperature circuit (20).

5. Cooling system according to one of Claims 1 to 4, **characterized in that** the charge air cooler (22) is embodied divided in two in order to be connected to different cooling circuits (14, 20), and **in that** part of the charge air cooler (22) can be connected to the high temperature circuit (14) and another part of the charge air cooler (22) can be connected to the low temperature circuit (20).

6. Cooling system according to one of Claims 1 to 5, **characterized in that** the high temperature circuit (14) and/or the low temperature circuit (20) have/has a coolant pump (16, 28).

7. Cooling system according to one of Claims 1 to 6, **characterized in that** the oil cooler (24) and/or the charge air cooler (22) can be short-circuited or disconnected from the high temperature circuit (14) and/or from the low temperature circuit (20).

8. Cooling system according to one of Claims 1 to 7, **characterized in that** the cooler of the low temperature circuit (20) and/or the cooler of the high temperature circuit (14) can be disconnected therefrom.

9. Cooling system according to one of Claims 1 to 8, **characterized in that** line connections of the internal combustion engine (12), of the oil cooler (24), if appropriate of the charge air cooler (22) and/or of the cooler (18, 26) of the high temperature circuit (14) and/or of the low temperature circuit (20) can be connected and/or disconnected by means of at least one valve (30, 32).

10. Cooling system according to Claim 9, **characterized in that** a valve (30, 32) has a thermostat and/or can be switched electrically or hydraulically.

11. Cooling system according to Claim 9 or 10, **characterized in that** a control device (40) and at least one temperature sensor (42, 44, 46, 48) are provided, wherein the temperature sensor (42, 44, 46, 48) generates signals which are dependent on the temperature of the cooling fluid and feeds these signals to the control device (40), and wherein the valve or the valves (30, 32) and/or a coolant pump (16, 28) can be actuated by the control device (40).

12. Cooling system according to one of Claims 1 to 11, **characterized in that**, for the purpose of cooling at least part of the charge air cooler (22) and/or of the oil cooler (24), a further cooling circuit (50) is provided which is arranged separately from the high temperature circuit (14) and the low temperature circuit (20), wherein the further cooling circuit (50) has a coolant pump (54) and a cooler (52).

## Revendications

1. Système de refroidissement pour un véhicule, comprenant un moteur à combustion interne (12), un circuit de haute température (14) et un circuit de basse température (20), le circuit de haute température (14) servant au refroidissement du moteur à combustion interne (12) et comportant au moins un refroidisseur (18) du circuit de haute température, le circuit de basse température (20) servant au refroidissement d'un refroidisseur d'huile (24) et d'un refroidisseur d'air de charge (22) et comportant au moins un refroidisseur (26) du circuit de basse température, le refroidisseur d'huile (24) pouvant être relié au circuit de haute température (14), **caractérisé en ce que** le circuit de haute température (14) est toujours séparé du circuit de basse température (20) et que le refroidisseur d'air de charge (22) peut être directement relié au refroidisseur d'huile (24).

2. Système de refroidissement selon la revendication 1, **caractérisé en ce que** le refroidisseur d'huile (24) comporte un refroidisseur d'huile conçu pour de l'huile de moteur à combustion interne et/ou un refroidisseur d'huile conçu pour de l'huile de boîte de vitesses.

3. Système de refroidissement selon la revendication 1 ou 2, **caractérisé en ce que** dans un certain état de fonctionnement du véhicule, le refroidisseur d'huile (24) n'est relié qu'au circuit de haute température (14), le refroidisseur (18) du circuit de haute température (14) pouvant de préférence être séparé du circuit de haute température (14).

4. Système de refroidissement selon l'une quelconque des revendications 1 à 3, **caractérisé en ce que** le refroidisseur d'huile (24) est divisé en deux pour être raccordé à deux circuits de refroidissement (14, 20) séparés et qu'une partie (36) du refroidisseur d'huile (24) peut être reliée au circuit de haute température (14) et qu'une autre partie (38) du refroidisseur d'huile (24) peut être reliée au circuit de basse température (20).

5. Système de refroidissement selon l'une quelconque des revendications 1 à 4, **caractérisé en ce que** le refroidisseur d'air de charge (22) est divisé en deux pour être raccordé à différents circuits de refroidissement (14, 20) et qu'une partie du refroidisseur d'air de charge (22) peut être reliée au circuit de haute température (14) et qu'une autre partie du refroidisseur d'air de charge (22) peut être reliée au circuit de basse température (20).

6. Système de refroidissement selon l'une quelconque des revendications 1 à 5, **caractérisé en ce que** le circuit de haute température (14) et/ou le circuit de basse température (20) comportent une pompe de moyen de refroidissement (16, 28).

7. Système de refroidissement selon l'une quelconque des revendications 1 à 6, **caractérisé en ce que** le refroidisseur d'huile (24) et/ou le refroidisseur d'air de charge (22) peuvent être court-circuités ou déconnectés du circuit de haute température (14) et/ou du circuit de basse température (20).

8. Système de refroidissement selon l'une quelconque des revendications 1 à 7, **caractérisé en ce que** le refroidisseur du circuit de basse température (20) et/ou le refroidisseur du circuit de haute température (14) peuvent être déconnectés du circuit correspondant.

9. Système de refroidissement selon l'une quelconque des revendications 1 à 8, **caractérisé en ce que** des jonctions de conduite du moteur à combustion interne (12), du refroidisseur d'huile (24), le cas échéant du refroidisseur d'air de charge (22) et/ou du refroidisseur (18, 26) du circuit de haute température (14) et/ou du circuit de basse température (20) peuvent être reliées et/ou suspendues par le biais d'au moins une soupape (30, 32).

10. Système de refroidissement selon la revendication 9, **caractérisé en ce qu'**une soupape (30, 32) comporte un thermostat et/ou peut être connectée par voie électrique ou hydraulique.

11. Système de refroidissement selon la revendication 9 ou 10, **caractérisé en ce qu'**un dispositif de commande (40) et au moins un capteur de température (42, 44, 46, 48) sont prévus, le capteur de température (42, 44, 46, 48) émettant des signaux dépendant de la température du liquide de refroidissement et ces signaux étant envoyés au dispositif de commande (40) et la soupape et/ou les soupapes (30, 32) et/ou une pompe de moyen de refroidissement (16, 28) pouvant être pilotées par le dispositif de commande (40).

12. Système de refroidissement selon l'une quelconque des revendications 1 à 11, **caractérisé en ce qu'**au moins une partie du refroidisseur d'air de charge (22) et/ou du refroidisseur d'huile (24) comporte un circuit de refroidissement (50) supplémentaire pour réaliser le refroidissement, ledit circuit étant disposé de façon à être séparé du circuit de haute température (14) et du circuit de basse température (20), le circuit de refroidissement (50) supplémentaire comportant une pompe de moyen de refroidissement (54) et un refroidisseur (52).
